# EUROPEAN PATENT APPLICATION

(11) **EP 2 950 223 A1**
(43) Date of publication of application: **02.12.2015**
(21) Application number: 13872347.3
(22) Date of filing: 31.12.2013
(51) Int. Cl.: G06F 17/30

(54) **METHOD AND APPARATUS FOR PROVIDING SEARCH ENGINE TAGS**

(30) Priority: 24.01.2013 CN 201310027311
(71) Applicant: Beijing Jingdong Century Trading Co., Ltd., Beijing 100176 (CN)
(72) Inventor: SHEN, Wei, Beijing 100176 (CN); LIU, Shangkun, Beijing 100176 (CN)
(74) Representative: Charrier, Rapp & Liebau
(86) International application number: PCT/CN2013/091105
(87) International publication number: WO 2014/114175

(57) **Abstract**

The present invention provides a method and device for providing a search engine label, which can provide the search engine label within a broader scope and has a comparatively high processing speed. The method comprises: extracting one or more attribute words in a sentence; performing a dependence relationship analysis on the sentence to obtain, for each attribute word, a dependence relationship path from the attribute word to a viewpoint word; extracting the viewpoint words corresponding respectively to each of the attribute words in the sentence based on the dependence relationship path; and using the attribute words and the viewpoint words to compose the search engine label.

## Description

### Technical Field

The present invention relates to a method and device for providing a search engine label.

### Background Art

At present, when searching a commodity on an electronic commerce website, a user can only perform searching and filtering based on the objective attributes of the commodity, e.g., color, size and the like. However, for searches with subjective tendencies, e.g., if the search word are "a camera with a good cost performance", generally no results will be returned. As for a subjective semantic search, currently a user generally needs to first find a type or model of a commodity on a generic search engine, and then search for the details of the commodity on the electronic commerce website. This will undoubtedly increase the operational overhead for a user. Further, it can be known through an analysis that most of the search results returned by the generic search engines are based on the evaluations provided by users on the websites such as BBS.

An electronic commerce website itself possesses considerably rich data of user comments, so labels of a search engine is also acquired based on the data of user comments on the electronic commerce website in the prior art. The main technical route is to automatically identify viewpoint information from the text of comments and analyze the viewpoints for obtaining users' evaluations on the respective attribute features of a commodity, and then associate the excavated evaluations with the commodity to form a search engine label. After obtaining the search engine label, existing search engine techniques can be used to provide search services including data evaluations to the users, wherein a search engine label is capable of indicating a user's subjective intention. Therefore, adopting this search engine label can support the provision of a search service with the subjective intention to a user.

One method for obtaining the above search engine label in the prior art is to firstly identify a viewpoint word, e.g., good, excellent, not bad and the like, in a text of comments based on a semantic dictionary, then obtain a short sentence which has a proper length and which is relatively semantically integral by extracting the context of the viewpoint word, and further use a semantic analysis tool, e.g., the Stanford University analyzer, to analyze this short sentence to thereby obtain a series of dependence relationships, and finally analyze these dependence relationships to extract the attributive object of the viewpoint word--- an attribute word, e.g., cost performance, appearance and the like. The attribute word is also called "non-predictive adjective" or "distinguishing word", which is a category of new words separate from nouns, verbs and adjectives as in the traditional grammars. An attribute word only expresses an attribute or characteristic of a person or a thing, and has a distinguishing or classifying function. The attribute word generally can only serve as an attribute and cannot serve as a predicate.

In the above approach, the extraction of the viewpoint word relies on a dictionary, and the extraction of the viewpoint word will not be successful if the word is not included in the dictionary. Therefore, the extent for providing the label is limited. In addition, in the above method, the context extraction for the text based on the viewpoint word is required to be done prior to the extraction of the attribute word, which leads to the decrease inefficiency.

### Summary of the Invention

In view of the above, the present invention provides a method and device for providing a search engine label, which can provide the search engine label within a broader scope and has a comparatively high processing speed.

In order to achieve the above object, a method for providing a search engine label is provided according to one aspect of the present invention.

The method for providing a search engine label of the present invention comprises: extracting one or more attribute words in a sentence; performing a dependence relationship analysis on the sentence to obtain, for each attribute word, a dependence relationship path from the attribute word to a viewpoint word; extracting the viewpoint words corresponding respectively to each of the attribute words in the sentence based on the dependence relationship path; and using the attribute words and the viewpoint words to compose the search engine label.

Optionally, before the step of extracting one or more attribute words in a sentence, the method further comprises: filtering text data based on a preset rule; and acquiring a sentence from the text data.

Optionally, the step of acquiring a sentence from the text data comprises: performing a clause division on the text data based on the punctuations to obtain short clauses; and acquiring the short clauses to serve as the sentence.

Optionally, the step of performing a dependence relationship analysis on the sentence to obtain, for each attribute word, a dependence relationship path from the attribute word to a viewpoint word comprises: performing the dependence relationship analysis on the sentence to obtain a series of dependence relationships of the sentence; obtaining, for each attribute word, the dependence relationship from the attribute word to a viewpoint word via the series of dependence relationships, based on the attribute words and the series of dependence relationships; and traversing the dependence relationships containing the viewpoint words to thereby obtain the dependence relationship path.

Optionally, the step of extracting the viewpoint words corresponding respectively to each of the attribute words in the sentence based on the dependence relationship path comprises: selecting a dependence relationship path having a comparatively high occurrence frequency from the dependence relationship paths; obtaining a dependence relationship rule based on the selected dependence relationship path; and extracting the viewpoint words corresponding to the respective attribute words in the sentence based on the dependence relationship rule.

Optionally, after the step of using the attribute words and the viewpoint words to compose the search engine label, the method further comprises: combining a plurality of labels containing synonymous viewpoint words into one label based on a synonymy.

A device for providing a search engine label is provided according to aother aspect of the present invention.

The device for providing a search engine label of the present invention comprises: an attribute word extraction module for extracting one or more attribute words in a sentence; a dependence relationship analysis module for performing a dependence relationship analysis on the sentence to obtain, for each attribute word, a dependence relationship path from the attribute word to a viewpoint word; a viewpoint word extraction module for extracting the viewpoint words corresponding respectively to each of the attribute words in the sentence based on the dependence relationship path; and a search engine label module for using the attribute words and the viewpoint words to compose the search engine label.

Optionally, the device further comprises a preprocessing module for filtering text data based on a preset rule, and then acquiring a sentence from the text data.

Optionally, the preprocessing module is further used for performing a clause division on the text data based on the punctuations to obtain short clauses, and then acquiring the short clauses to serve as the sentence.

Optionally, the dependence relationship analysis module is further used for: performing the dependence relationship analysis on the sentence to obtain a series of dependence relationships of the sentence; obtaining, for each attribute word, the dependence relationship from the attribute word to a viewpoint word via the series of dependence relationships, based on the attribute words and the series of dependence relationships; and traversing the dependence relationships containing the viewpoint words to thereby obtain the dependence relationship path.

Optionally, the viewpoint word extraction module is further used for: selecting a dependence relationship path having a comparatively high occurrence frequency from the dependence relationship paths; obtaining a dependence relationship rule based on the selected dependence relationship path; and extracting the viewpoint words corresponding to the respective attribute words in the sentence based on the dependence relationship rule.

Optionally, the device further comprises a normalization module for combining a plurality of labels containing synonymous viewpoint words into one label based on a synonymy.

According to the technical solution of the present invention, the attribute words are excavated and the corresponding viewpoint words are excavated based on the dependence relationships, and the excavated attribute words can also be filtered when no corresponding viewpoint words exist. The technical solution of the present embodiment does not rely on a dictionary, and thus facilitates provision of a search engine label within a broader scope; and no context extraction for a sentence is required, which facilitates the improvement of the processing speed.

### Brief Description of the Drawings

The figures are used for a better understanding of the present invention, and do not constitute improper limitations of the present invention. Wherein:
Fig. 1 is a schematic diagram of the method for providing a search engine label according to an embodiment of the present invention;
Fig. 2 is a schematic diagram of the basic structure of the device for providing a search engine label according to an embodiment of the present invention.

### Detailed Description

The following part will illustrate exemplary embodiments of the present invention with reference to the figures, including various details of the embodiments of the present invention for a better understanding. The embodiments should be regarded only as exemplary ones. Therefore, those skilled in the art should appreciate that various changes or modifications can be made with respect the embodiments described herein without departing from the scope and spirit of the present invention. Similarly, for clarity and conciseness, the descriptions of the known functions and structures are omitted in the descriptions below.

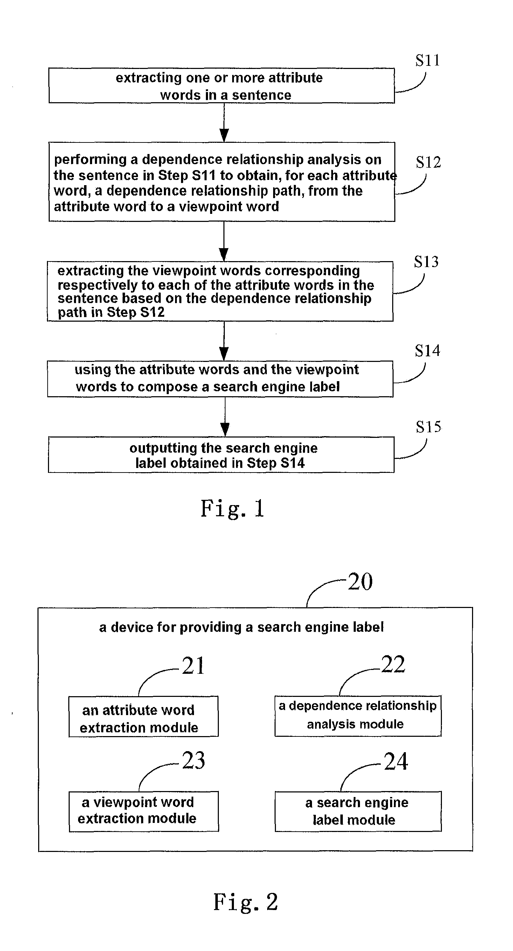

Fig. 1 is a schematic diagram of the method for providing a search engine label according to an embodiment of the present invention. As shown in Fig. 1, the method mainly includes Step S11 to Step S 14.

Step S11: extracting one or more attribute words in a sentence. A noun (NN), a verb (VV) and a composite form such as a noun + a verb (NN+VV) in a commenting sentence can be extracted as candidate attribute words by adopting an approach of pattern matching for part-of-speech . The sentence herein is acquired from the text data, and the text data can be first filtered based on the preset rule, and then clause division can be performed on the text data based on the punctuations to obtain short clauses, and the short clauses be used as the sentence at this step. In the above example it is shown that the text data is the information of commodity comments on the electronic commerce websites, the above filtering step would be to preprocess the original comments extracted from the websites, filter out the meaningless phrases or sentences such as marketing advertisements, stop words and default comments in these comments based on some rules, and then remove phrases or sentences having voluminous repetitions in the same comment.

Step S12: performing a dependence relationship analysis on the sentence in Step S11 to obtain, for each attribute word, a dependence relationship path from the attribute word to a viewpoint word. Specifically, this step may be: first perform the dependence relationship analysis on the above sentence to obtain a series of dependence relationships of the sentence, then obtain, for each attribute word, the dependence relationship from the attribute word to a viewpoint word via the series of dependence relationships, based on the attribute words and the series of dependence relationships, and finally traverse the dependence relationships containing the viewpoint words to thereby obtain the dependence relationship path. It can be seen that at this step, a plurality of passing dependence relationships are utilized to form the dependence relationship path, which facilitates a deep excavation of the viewpoint words.

Step S13: extracting the viewpoint words corresponding respectively to each of the attribute words in the sentence based on the dependence relationship path in Step S12. If no viewpoint word is extracted for a certain attribute word, this attribute word will be deleted from the set of attribute words obtained at Step S11. Specifically, this step may be: firstly select a dependence relationship path having a comparatively high occurrence frequency from the dependence relationship paths, and then obtain a dependence relationship rule based on the selected dependence relationship path, and finally extract the viewpoint words corresponding to the respective attribute words in the sentence based on the dependence relationship rule.

Step S14: using the attribute words and the viewpoint words to compose the search engine label. The attribute words herein refer to the set of attribute words after Step S13. After this step, a combination can be performed based on the synonyms of the viewpoint words in the search engine label, i.e., combining a plurality of labels containing synonymous viewpoint words into one label based on a synonymy. For example, the labels "good cost performance", "high cost performance" and "matchless cost performance" are combined into the label "high cost performance".

Labels can used to establish an index for the commodities for searches by users. However, in some cases, the search word inputted by a user himself or herself may be not one obtained in the steps as shown in Fig. 1, so it may be needed to further perform Step S15.

Step S15: outputting the search engine label obtained in Step S14. At this step, the search engine label is presented in a human-computer interface, e.g., on a web page, of a terminal device used by the user, and the user can submit this search engine label to the search engine to thereby start a search by clicking on this search engine label, whereby the user can achieve filtering of the commodities based on the various attribute words presented on the page.

Fig. 2 is a schematic diagram of the basic structure of the device for providing a search engine label according to an embodiment of the present invention. As shown in Fig. 2, a device 20 for providing a search engine label basically comprises an attribute word extraction module 21, a dependence relationship analysis module 22, a viewpoint word extraction module 23, and a search engine label module 24. The attribute word extraction module 21 is used for extracting one or more attribute words in a sentence. The dependence relationship analysis module 22 performs a dependence relationship analysis on the sentence to obtain, for each attribute word, a dependence relationship path from the attribute word to a viewpoint word. The viewpoint word extraction module 23 extracts the viewpoint words corresponding respectively to each of the attribute words in the sentence based on the dependence relationship path. The search engine label module 24 uses the attribute words and the viewpoint words to compose the search engine label.

The device 20 for providing a search engine label can further comprise a preprocessing module (not shown in the figure) for filtering text data based on a preset rule, and then obtaining a sentence from the text data. The preprocessing module can be further used for performing a clause division on the text data based on the punctuations to obtain short clauses, and then acquiring the short clauses to serve as the sentence.

The device 20 for providing a search engine label can further comprise a normalization module (not shown in the figure) for combining a plurality of labels containing synonymous viewpoint words into one label based on a synonymy.

The dependence relationship analysis module 22 can be further used for: performing the dependence relationship analysis on the sentence to obtain a series of dependence relationships of the sentence; obtaining, for each attribute word, the dependence relationship from the attribute word to a viewpoint word via the series of dependence relationships, based on the attribute words and the series of dependence relationships; and traversing the dependence relationships containing the viewpoint words to thereby obtain the dependence relationship path.

The viewpoint word extraction module 23 can be further used for: selecting a dependence relationship path having a comparatively high occurrence frequency from the dependence relationship paths; obtaining a dependence relationship rule based on the selected dependence relationship path; and extracting the viewpoint words corresponding to the respective attribute words in the sentence based on the dependence relationship rule.

According to the technical solution of an embodiment of the present invention, the attribute words can be excavated and the corresponding viewpoint words can be excavated based on the dependence relationships, and meanwhile the excavated attribute words can also be filtered when no corresponding viewpoint words exist. The technical solution of the present embodiment does not rely on a dictionary, and thus facilitates provision of a search engine label within a broader scope; and since no context extraction for a sentence is required, it can also improve the processing speed.

The above descriptions depicts the basic principles of the present invention with reference to the specific embodiments. However, it is necessary to point out that those skilled in the art shall understand that all or any step or part of the method and device of the present invention can be realized through hardware, firmware, software or a combination thereof in any computing device (including a processor, a storage medium, etc.) or a network of a computing device. This can be realized by those skilled in the art by applying their basic programming skills after they read the descriptions of the present invention.

So, the purpose of the present invention can be also achieved by running a program or a set of programs on any computing device. The computing device can be a generic device already known. Therefore, the purpose of the present invention can be also achieved only by providing a program product including program codes implementing the method or device. That is to say, such a program product also constitutes the present invention, and a storage medium storing such a program product also constitutes the present invention. Obviously, the storage medium can be any known storage medium or any storage medium developed in the future.

It is further necessary to point out that in the device and method of the present invention, the respective parts or the respective steps obviously can be decomposed and/or recombined. These decompositions and/or recombinations shall be regarded as equivalent solutions of the present invention. And the steps performing the above series of processings can be naturally performed in a time sequence based on the described sequence, but are not necessarily performed in the time sequence. Some steps can be performed in parallel or independently of each other.

The above specific embodiments do not constitute a restriction on the scope of protection of the present invention. Those skilled in the art shall understand that, based on design requirements and other factors, various modifications, combinations, sub-combinations and substitutions can occur. Any modifications, equivalent substitutions, improvements, etc. within the spirit and principle of the present invention shall be included in the scope of protection of the present invention.

## Claims

1. A method for providing a search engine label, **characterized by**, comprising:
extracting one or more attribute words in a sentence;
performing a dependence relationship analysis on the sentence to obtain a dependence relationship path, with respect to each attribute word, from the attribute word to a viewpoint word;
extracting the viewpoint words corresponding respectively to each of the attribute words in the sentence based on the dependence relationship path; and
using the attribute words and the viewpoint words to compose the search engine label.

2. The method according to claim 1, **characterized in that**, before the step of extracting one or more attribute words in a sentence, the method further comprises:
filtering text data based on a preset rule; and
acquiring a sentence from the text data.

3. The method according to claim 2, **characterized in that**, the step of acquiring a sentence from the text data comprises:
performing a clause division on the text data based on the punctuations to obtain short clauses; and
acquiring the short clauses to serve as the sentence.

4. The method according to claim 1, **characterized in that**, the step of performing a dependence relationship analysis on the sentence to obtain a dependence relationship path, with respect to each attribute word, from the attribute word to a viewpoint word comprises:
performing the dependence relationship analysis on the sentence to obtain a series of dependence relationships of the sentence;
obtaining, for each attribute word, the dependence relationship from the attribute word to a viewpoint word via the series of dependence relationships, based on the attribute words and the series of dependence relationships; and
traversing the dependence relationships containing the viewpoint words to thereby obtain the dependence relationship path.

5. The method according to claim 1 or 4, **characterized in that**, the step of extracting the viewpoint words corresponding respectively to each of the attribute words in the sentence based on the dependence relationship path comprises:
selecting a dependence relationship path having a comparatively high occurrence frequency from the dependence relationship paths;
obtaining a dependence relationship rule based on the selected dependence relationship path; and
extracting the viewpoint words corresponding to the respective attribute words in the sentence based on the dependence relationship rule.

6. The method according to any one of claims 1 to 4, **characterized in that**, after the step of using the attribute words and the viewpoint words to compose the search engine label, the method further comprises: combining a plurality of labels containing synonymous viewpoint words into one label based on a synonymy.

7. A device for providing a search engine label, **characterized by**, comprising:
an attribute word extraction module for extracting one or more attribute words in a sentence;
a dependence relationship analysis module for performing a dependence relationship analysis on the sentence to obtain, for each attribute word, a dependence relationship path from the attribute word to a viewpoint word;
a viewpoint word extraction module for extracting the viewpoint words corresponding respectively to each of the attribute words in the sentence based on the dependence relationship path; and
a search engine label module for using the attribute words and the viewpoint words to compose the search engine label.

8. The device according to claim 7, **characterized by**, further comprising a preprocessing module for filtering text data based on a preset rule, and then acquiring a sentence from the text data.

9. The device according to claim 8, **characterized in that**, the preprocessing module is further used for performing a clause division on the text data based on the punctuations to obtain short clauses, and then acquiring the short clauses to serve as the sentence.

10. The device according to claim 7, **characterized in that**, the dependence relationship analysis module is further used for:
performing the dependence relationship analysis on the sentence to obtain a series of dependence relationships of the sentence;
obtaining, for each attribute word, the dependence relationship from the attribute word to a viewpoint word via the series of dependence relationships, based on the attribute words and the series of dependence relationships; and
traversing the dependence relationships containing the viewpoint words to thereby obtain the dependence relationship path.

11. The device according to claim 7 or 10, **characterized in that**, the viewpoint word extraction module is further used for:
selecting a dependence relationship path having a comparatively high occurrence frequency from the dependence relationship paths;
obtaining a dependence relationship rule based on the selected dependence relationship path; and
extracting the viewpoint words corresponding to the respective attribute words in the sentence based on the dependence relationship rule.

12. The device according to any one of claims 7 to 10, further comprising a normalization module for combining a plurality of labels containing synonymous viewpoint words into one label based on a synonymy.
